# EUROPEAN PATENT APPLICATION

(11) **EP 0 706 139 A1**
(43) Date of publication of application: **10.04.1996**
(21) Application number: 95304792.5
(22) Date of filing: 10.07.1995
(51) Int. Cl.: G06F 17/30

(54) **Method and apparatus for finding file paths on a computer system**

(30) Priority: 09.09.1994 US 303346
(71) Applicant: ADOBE SYSTEMS INC., Mountain View California 94039-7900 (US)
(72) Inventor: Paknad, Mohammed Daryoush, Palo Alto, California 94306 (US); Hawley, Stephen, Mountain View, California 94040 (US)
(74) Representative: Wombwell, Francis

(57) **Abstract**

A method, apparatus, and software for finding a file stored on a host computer system are described. More particularly, a method, system and software that can be used to located files stored on a client computer system which is coupled to the host computer system, *e.g.*, across a computer network. The method includes the steps of determining a requested file name provided by a requestor; searching the host computer system of at least one target file name which is closely related to the requested file name; and presenting the file name to the requestor. In one embodiment, the requestor is a finder routine running on a client computer which is coupled to a host computer system.

## Description

### BACKGROUND OF THE INVENTION

### 1. Field of the Invention

The present invention relates to methods and systems for locating documents stored on a computer system. More specifically, the present invention relates to methods and systems for locating and presenting files on a network of computers using two or more operating systems.

### 2. The Relevant Art

The past decade has witnessed a virtual explosion of computer products. This proliferation has brought down the cost of obtaining hardware and software to a level where many organizations can afford to provide access to a computer to most workers. Not surprisingly, many workplaces have adopted computer systems in the hopes of reaping the benefits of such computer technologies as electronic document production, database management, graphics design, personnel management and accounting.

In addition, today's computer users have a wide variety of hardware and software products from which to choose, each hardware and software product having unique features and advantages with respect to its user interface and capabilities. The availability of such a variety of products has allowed organizations to purchase computer systems with an eye toward the specific strengths and weaknesses present in each product. Thus, it is not uncommon to find organizations maintaining two or more computing platforms. For example, a business may include workstations running the UNIX operating system for computation intensive tasks such as computer-aided design/engineering (CAD/CAE), Macintosh® computers running Apple, Incorporated's System and Finder for graphics-intensive applications and desktop publishing, and computers running the Windows or DOS operating system for tasks such as accounting and word processing.

In tandem with the increased availability of computers and software has been the desire to link computers electronically so that information can be disseminated and manipulated with a minimal use of paper. The quest for the "paperless office" is driven in part by concerns regarding the cost of printing and storing documents and the environmental effects of paper consumption. The use of paper in the workplace requires extensive support systems, including devices for paper storage such as filing cabinets, floorspace to accommodate the storage and personnel to handle the transfer and filing of the paper. The ecological concerns associated with paper consumption include the destruction of forests and water pollution created by paper production operations such as pulping and milling. In addition, organizations seek to "manage" their documents so that current and accurate information is readily available to the appropriate personnel.

To satisfy these demands, a variety of networking products have reached the market in recent years to provide computer users with a relatively intuitive means of sending messages and files to other users at remote sites. Unfortunately, the goals of minimizing paper use and more complete document management have been frustrated by the variety of computers and operating systems commonly found on networks. In particular, networked computers running different operating systems often have great difficulty exchanging documents electronically due to incompatibilities resulting from differences among operating systems in such areas as file formatting and font handling. Another frustration is locating files stored within complex chains of directories and subdirectories, which occurs for single users as well as network users.

Recently, some software publishers have developed applications which allow users to exchange documents regardless of the particular computing platform on which the documents were produced. An example of such a product is Adobe Systems Incorporated's Acrobat™ software, which allows files produced by software applications running on different platforms to be disseminated in a platform-independent format. The files can be read at a different computing platforms using special "reader" software specific to those platforms. In addition, these applications can generate indexes which can be searched by users to find documents containing various terms. Thus, users on a network can search for and retrieve work done by colleagues at remote sites. Such software promises great savings in terms of reducing duplicative efforts by workers and reducing the use of paper. In addition, it is often advantageous for users to create indexes of the files stored on their systems and networks for quick and efficient location of files on their local data storage devices.

However, a problem remains with respect to generating indexes that users can access regardless of the operating system they are using. Some operating systems allow the user to generate file names with relatively few limitations, while other operating systems, such as Windows and DOS have more stringent requirements for filenames. For example, the Macintosh® and UNIX operating system allows filenames to written in either upper or lower case and without regards to the presence of spaces, with a maximum length of thirty-two characters. In contrast, DOS and Windows both require file names consisting of eight lower case characters followed by a decimal point, which may optionally be followed by as many as three additional characters (the "eight-plus-three" format). To add another layer of confusion, network systems generate unique eight-plus-three filenames which are not seen by the users on the network. Usually, filenames which are not within the eight-plus-three format are truncated and manipulated so as to fit that format. This unseen filename conversion makes retrieval problematic for users of operating systems that do not employ the eight-plus-three convention, as the file names returned in an index search will bear no resemblance to those actually seen by the user. Thus, it would be advantageous to have a system which will allow the indexing and retrieval of files by a user regardless of the operating system the user employs.

### SUMMARY OF THE INVENTION

The present invention provides a method, system and software for determining the file name of a file stored on a host computer that corresponds to a requested file name.

In one embodiment, the present invention includes a method for finding a file stored on a host computer system. The method includes the steps of determining a requested file name provided by a requestor; searching the host computer system for at least one target file name which is closely related to the requested file name; and presenting the file name to the requestor. In one preferred embodiment, the requestor is a finder routine running on a client computer which is coupled to the host computer system. In another preferred embodiment, all of the directories on the host computer are traversed during the search.

In an especially preferred embodiment, a set of heuristics is applied to the requested file name to provide variations of the requested file name which are compared to a plurality of file names on the host computer. The heuristics include removing the white spaces from the requested path name; converting all of the characters of the requested path name to lower case; and applying a weighted distance correspondence score to determine near matches between the requested path name and target path names.

In another embodiment, the present invention includes a finder system for finding file on a computer system including a data storage device comprising at least one file; means for requesting a file which may reside on the data storage device by a requested file name; and means for searching the computer for said file by comparing variations of the requested file name with the file names on the data storage device to provide a set of potential target file names. In a preferred embodiment, the finder system includes a network, a host computer system and a client computer system which requests a file that may reside on the host computer system.

In still another embodiment, the present invention includes software for determining the file name of a file stored on a host computer system that corresponds to a requested file name, including a permutator for permuting the requested file name; a comparator for comparing the permutations of the requested file name with file names on the host computer; and a selector for selecting matches found by the comparator.

### BRIEF DESCRIPTION OF THE DRAWINGS

Figure 1 is a schematic representation of a computer network including a hub, server, and several nodes.

Figure 2 is a schematic representation of host and client computer systems connected to a server over a computer network.

Figure 3 is a schematic representation of a computer system including a microprocessor, a data storage means, a display means, and a network connection.

Figure 4 is a flow chart illustrates a preferred embodiment of the method of the present invention.

Figure 5 is a flow diagram illustrating the process step 404 of Figure 4.

Figure 6A is an example of a file path name with the directory levels labeled.

Figure 6B is an example of a file tree structure illustrating the process described in Figure 7.

Figures 7A through 7C are flow diagrams illustrating the process step 414 of Figure 4.

Figures 8A and 8B are flow diagrams illustrating the process step 416 of Figure 4.

### DESCRIPTION OF THE PREFERRED EMBODIMENT

The present invention includes a method, apparatus, and software for finding a file stored on a host computer system. More particularly, the present invention can be used to located files stored on a client computer system which is coupled to the host computer system, *e.g.*, across a computer network. As used herein, the term the term "host computer system" is defined as a computer which holds a file being sought by the client computer, either in its own primary memory or on storage media coupled directly to the host computer, such as a hard disk, floppy disk, CD-ROM, tape drive, bubble memory, magnetic drum, charge-coupled device or the like, or on storage media located at a remote site and indirectly coupled to the host computer. The term "client computer system" denotes a remote computer which is engaged in searching for a file. The client computer may be coupled physically to the host computer by means of a computer network cabling, such as twisted pair, coaxial, optical fiber and the like, or by other means such as a telecommunications link using, for example, a modem. Most networks are managed by specialized software running on one or more of the computer systems connected to the network. A "file" is any type of data structure which resides on storage media. *See*, THE ENCYCLOPEDIA OF COMPUTER SCIENCE Third Edition , Ralston and Reilly Eds. (Van Norstrand Reinhold 1993), which is incorporated herein by reference.

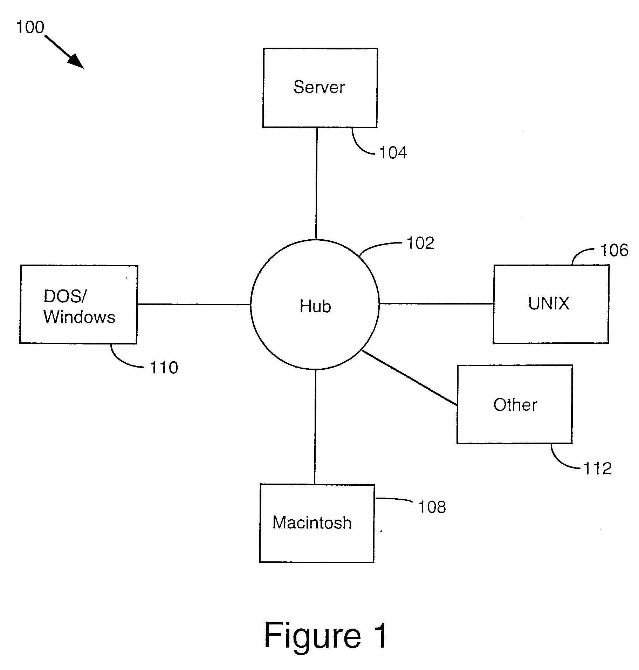

Turning now to Figure 1, a example of a computer network comprising computers running various operating systems is illustrated at 100. The network includes a hub 102, a server 104, and various nodes 106 through 112 which are connected to the hub. For example, a particular node may be represented by a UNIX workstation 106, another node may be represented by a computer running the Macintosh® operating system 108, another node running either DOS and/or Windows 110 and still additional nodes running other operating systems such as indicated at 112. The server 104 may be running network management software such as Novell NetWare or AppleShare®. The hub, server and related hardware, software and organization of such a network are all well known to those skilled in the art.

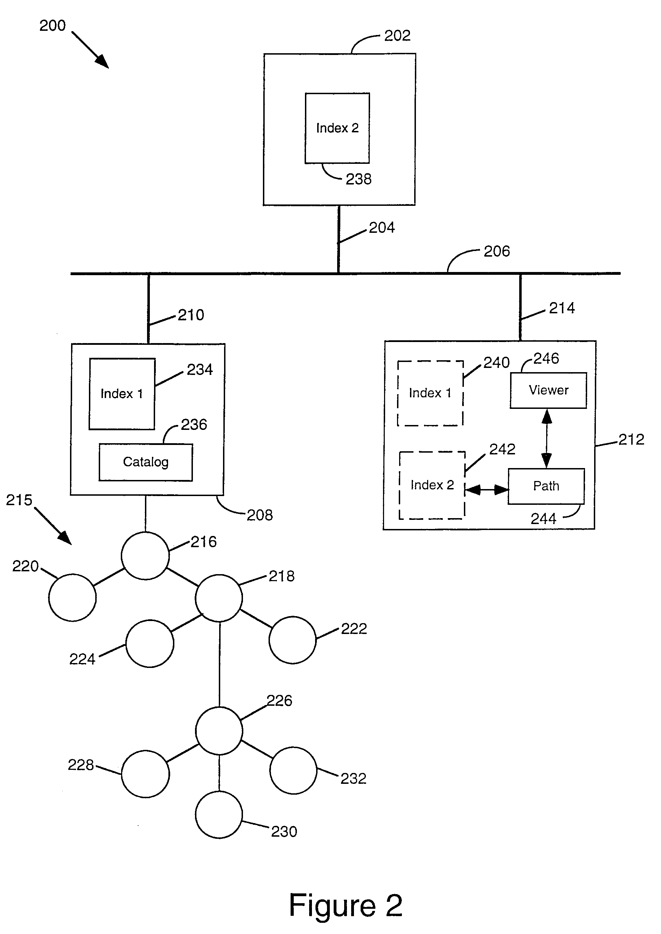

Figure 2 is an illustration of networked host and client computer systems. As shown at 200, a server 202 is connected by branch cable 204 to a network backbone shown at 206. This backbone 206 can be a single cable or a hub (concentrator) as shown previously in Figure 1. Extending also from the network is a host computer system 208 which is connected by cable 210 to the network. Also connected to the network is a client computer system 212 which is connected to the network by data line 214. The devices, materials and methods for forming such a network are well known to those of skill in the art.

Host computer system 208 includes a data storage device (not shown), such as a hard disk drive, which has a file tree such as that shown generally at 215. The file structure includes a root level directory 216 from which extends subdirectories such as those shown at 220 and 218. It will be appreciated by those who are skilled in the art that a particular directory may contain both files and subdirectories or may be empty. By way of example, subdirectory 220 contains no further subdirectories, while subdirectory 218 includes subdirectories 222, 224, and 226. Subdirectory 226 further includes subdirectories 228, 230 and 232. All, some or none of the directories may contain files or documents. Further illustrated in host computer system 208 is a catalog 236 which stores information regarding the locations on the hard disk of the various directories 216 through 232 and the files associated therewith. Further included in the host computer system is a first index 234, which index correlates information contained in various files on the hard disk with the locations or file path names for those files or documents. For example, index 234 may be a list correlating words contained in various files on the disk with the path names for those files. Thus, accessing the first index would allow a user to search for the locations of various words located in documents on the disk and retrieve the file path names for those documents.

Server 202 includes a second index 238, similar to first index 234, which index includes the same types of information as found in the first index, although the second index will typically include information for all of the computer systems attached to the network. Such an index provides a central source for storing information regarding all of the files on the network. Thus, a user can use the second index to locate and access files stored on remote storage media.

Client computer system 212 includes an image of the first index, shown at 240, and an image of the second index, shown at 242. The indexes reside not on the permanent storage media of the client computer system, but are loaded into the random access memory (RAM) of the client computer system. Also included on computer system 212 are a path name finder 244 and a viewer 246. The path name finder, which will be described in greater detail below, may be a stand-alone application or a function of a larger program. A requestor provides a requested file name to the path finder which searches the relevant directories for files corresponding to the requested file name. The requested file name will also be referred to herein as the source file name. Generally, when the requestor is the computer's user, the viewer program is employed as an interface between the user of the client computer system and the path name finder for providing input of a requested file name from the requestor and for presenting output to the requestor. However, the path name finder may be accessed by a finder routine which by itself is the requestor. Although the viewer and path name finder routine are illustrated as being installed on the client computer system, it will be appreciated that either or both the viewer and path name finder can reside on the host computer along with the first index and the files being searched.

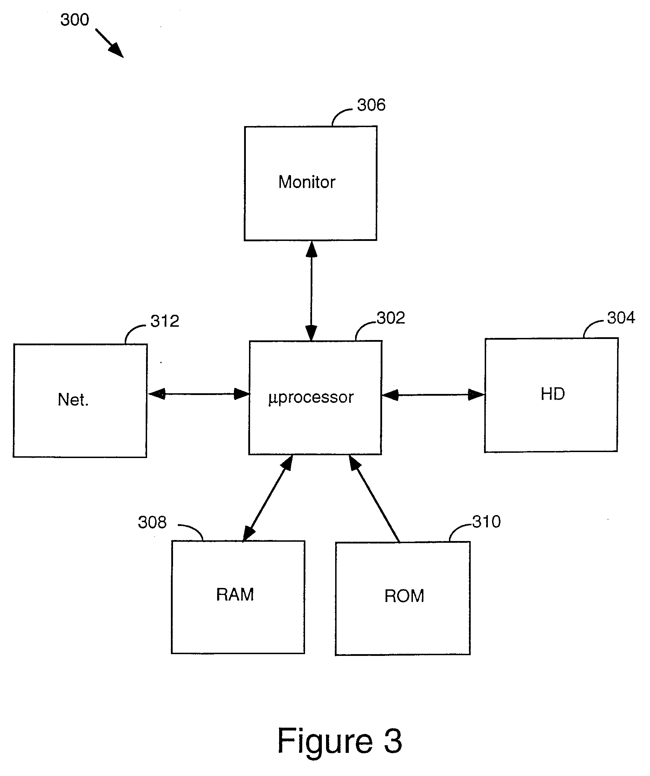

The method and software of the present invention as embodied in the path name finder are intended to be used in conjunction with a standard computer system such as illustrated generally at 300 in Figure 3. Such a computer system includes a microprocessor 302, a hard disk 304 or other permanent memory, a monitor 306 or other display, RAM 308 and a read only memory (ROM) 310. The microprocessor is an integrated circuit which accepts and executes coded instructions. The ROM typically contains the basic operating instructions for the microprocessor. The data storage means provide non-volatile data storage. A network connection 312 may also be included. These elements are all of standard design and construction and will be familiar to those of skill in the art.

Generally, the path name finder and viewer are stored in the hard disk 304. When in use, the path name finder and, if appropriate, the viewer, are loaded into the RAM for execution by the microprocessor. Using the path name finder routine, a requestor, such as the user of the host computer system, or a finder routine running on either the host or client computer system or other system such as a file server, accesses the images of the first and second indexes which have been loaded into the RAM to search for at least one target file name which resides either on the host computer system. Upon execution, the path name finder routine searches some or all of the directories resident on the host computer system for at least one target file name which is closely related to the to the requested file name, using methods which are described in detail below. When the path name finder routine has completed searching the appropriate directories of the host computer system the target file names uncovered by the path name finder are presented to the requestor.

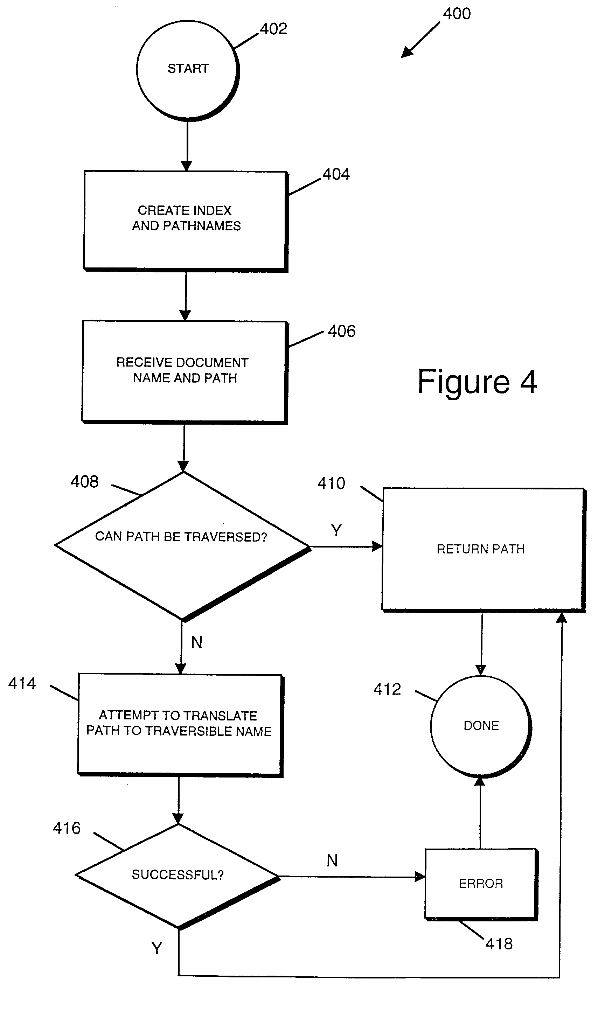

Figure 4 provides an overview of a preferred embodiment of the path name finder of the invention at 400. Beginning with start sequence 402, an index of searchable elements and the paths names of the files associated with those elements is created in step 404. In step 406, a file name and path are received from the index and, at step 408, it is determined whether the path name received can be traversed, *i.e.*, whether the file can be accessed by the resident operating system of the computer. Typically this step is a test to determine if the requested file name matches a target file name. If the file path can be traversed, then, at step 410, the path name is returned to the user and, at step 412, the program finishes execution. However, if it is not possible to traverse the path, then an attempt to translate the path into a traversible file path name is made at step 414, using methods which will be described in greater detail below. An evaluation of the success of the attempted translation is determined at step 416, as described below. If the attempted translation is not successful, an error is returned to the user at step 418 and the program finishes execution at step 412. If the attempt is successful, however, the file path name is returned to the user and execution of the program ceases as described above. The indexable elements can comprise words, characters or patterns of characters which are present in the files. Generally, however, only files containing information which can be indexed are included in the indexing operation. For example, files having the Portable Document Format™ provided by Adobe Systems, Incorporated of Mountain View, California (denoted by the file extension ".pdf") are indexed as such files will contain information which can be organized. Other types of files may not be indexed easily, such as files containing image data (*e.g.*, TIFF or JPEG files).

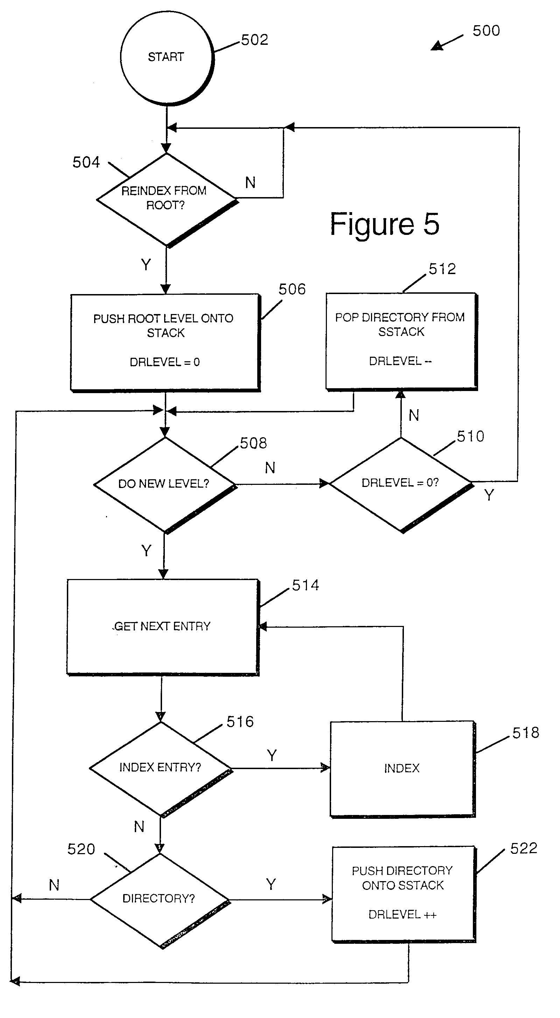

Figure 5 describes in greater detail the indexing step 404 shown in Figure 4 above. The indexing process, shown generally at 500, begins with step 502. At step 504, the necessity of reindexing the existing index from the root level directory downward is determined for the drive or network to be searched. Typically, this determination involves assessing whether or not a user has modified or deleted an existing file in the system, or whether a user has created a new file on the system. Such an assessment can be made, *e.g.*, by referring to the local system or network file activity log. If reindexing is not required, the program loops back to step 504. If, however, reindexing is determined to be appropriate, then, at step 506, the name of the root level directory is pushed onto the stack and the variable DRLEVEL is set to 0. This variable functions to keep track of the directory level as the program moves throughout the various directories of the storage media or network. Next, at step 508, a determination is made as to whether a new directory level is to be indexed. This determination is made based on determining the presence of any files which have not been indexed since being created or modified, or the presence of subdirectories which need to be investigated for unindexed files. If unindexed files or additional directories exist, then, at step 514, the next entry for indexing is obtained. At step 516, a determination is made as to whether this new entry is a file to be indexed. If the entry is a file of the type being indexed, then, at step 518, the file is indexed and the next entry is obtained back at step 514. Preferably, the file is marked as having been indexed so the program can determine efficiently if the file needs to be reindexed at a later time.

If the entry is not be indexed, then, at step 520, it is determined whether the entry is a subdirectory. If the entry is a subdirectory, the name of that directory is pushed on to the source stack and the variable DRLEVEL is incremented by one unit to indicate that a new level of the file tree is being investigated. The program then returns step 508 to begin the analysis of whether a new level is required again. If the entry is not a directory, then process control is returned to step 508. If, at step 508, a new level is determined not to be necessary, then, at step 510, the value of DRLEVEL is checked. If DRLEVEL is 0, then control moves back up to step 504 where the system waits for an indication of activity as described above. If DRLEVEL is not 0, the directory name is popped or removed from the source stack and the variable DRLEVEL is decremented by one unit. Execution of the program then returns to step 508 and proceeds as described above.

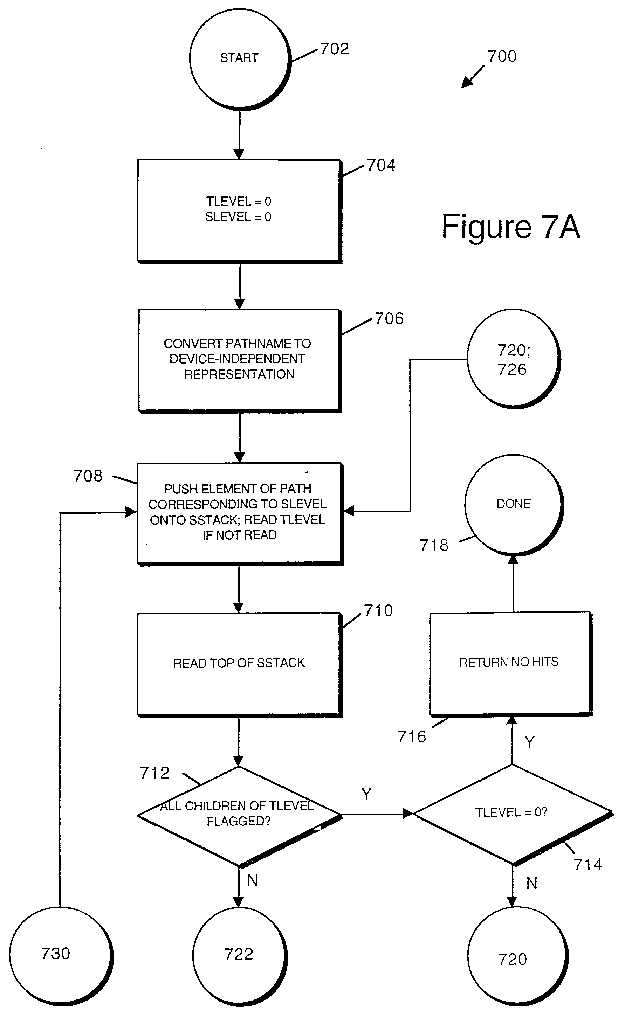

Element 414 of Figure 4 will now be described in greater detail with reference to Figures 7A through 7C. As shown generally at 700, the sequence of steps comprising step 414 begins with start step 702. At step 704, the variables TLEVEL and SLEVEL are both set to 0. These variables track the directory level of the target file name (TLEVEL) and the requested file name (SLEVEL). The root directory level is defined as level 0. In addition, the RAM available to the path name finder is apportioned into a source stack (SSTACK) and a target stack (TSTACK) into which the characters which comprise the directory names of the source and target files will be loaded. At step 706, the path name provided in step 406 is converted into a device independent representation. The conversion of the file path name to a device independent representation comprises removing from the file path name those characters which are used to delineate the different directory levels. Thus, for file names written using the convention employed by the Macintosh® and Windows operating systems, the colons used to separate the directory and subdirectory names are removed from the different path name elements. In the DOS operating system, the directory levels are denoted by a backslash character, and for UNIX operating systems the directory levels are denoted by a foreslash.

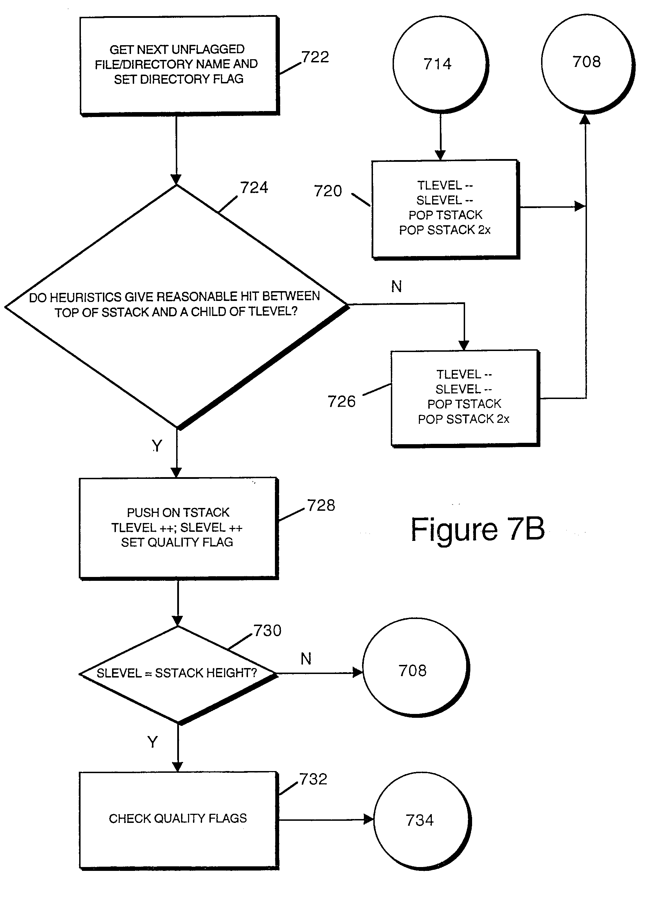

Once the device-independent path name has been created, the characters of the path name corresponding to SLEVEL = 0 are placed onto the source stack at step 708. The corresponding characters of the target path name are then read into the target stack. Once loaded, the top of the source stack is read at step 710, and, at step 712, a determination is made as to whether all of the subdirectories (or "children") at the present TLEVEL have been flagged. In a preferred embodiment, this step is performed by first assigning an array element to each subdirectory immediately below the TLEVEL directory. As each subdirectory is investigated a flag is set in the appropriate array element. If all of the subdirectories at TLEVEL have been flagged, *i.e.*, have been investigated, then, at step 714, the value of TLEVEL is checked. If TLEVEL is 0 an indication that no hits, or matches, between file path names were found is passed and execution terminates at step 718. If the value of TLEVEL is not equal to 0, then control passes to step 720 which is shown in Figure 7B. At step 720, the values of TLEVEL and SLEVEL are both decremented one unit. The directory name characters in TSTACK are removed from memory, and the characters of the two highest directory names are removed from SSTACK. Control then passes back to step 708 in Figure 7A.

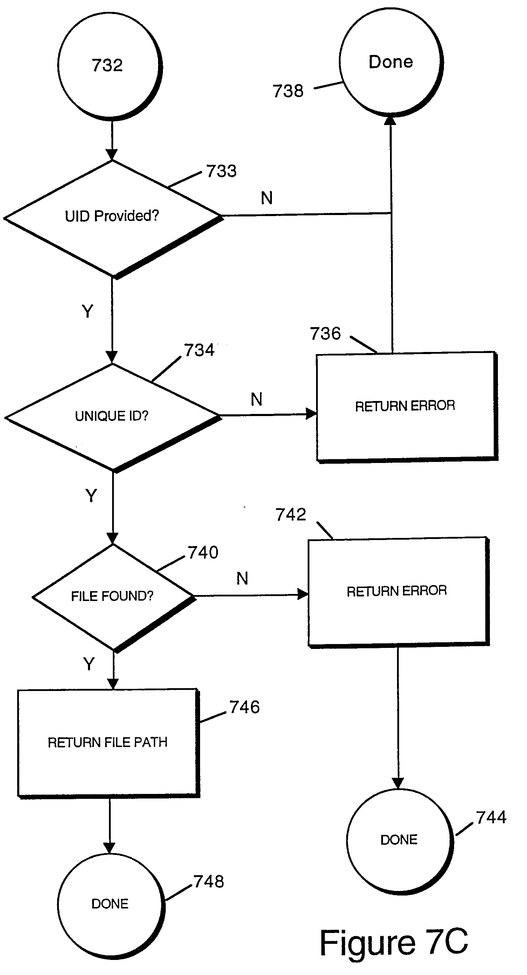

Returning to the query made at step 712, if at least one of the subdirectories has not been flagged, control passes to step 722 in Figure 7B, wherein the next unflagged file name or directory name is retrieved and a flag is set for the directory currently at the top of the target stack. At step 724 various heuristic rules are applied to the path name characters at the top of SSTACK to provide variations of the requested file name which are compared to the characters of the subdirectory name at TLEVEL. These heuristics will be described in greater detail below. If a reasonable correlation between the source file name and the target file name is not obtained, then, at step 726, the values of TLEVEL and SLEVEL are both decremented one unit, TSTACK and SSTACK are cleared as described for step 720, and control returns to step 708 of Figure 7A. Care should be taken to avoid stack underflow errors by setting TSTACK or SSTACK to 0 if TLEVEL or SLEVEL becomes less than 0, respectively. If a reasonable correlation is found in step 724, then, at step 728, the characters of the subdirectory name are pushed onto the top of TSTACK and the values of TLEVEL and SLEVEL are both incremented one unit. In a preferred embodiment, a quality flag is also set, as described in greater detail below. At step 730, a determination is made as to whether the value of SLEVEL is equal to the height of SSTACK, indicating that all of the path name elements provided in the requested file name have been examined. If the answer is "no", then control returns to step 708. If, however, all of the source stack elements have been examined, then, at step 732, the quality flags are checked to determine the accuracy of the file path name provided by the application of heuristics above in step 724. Control then passes to step 734 which is shown in Figure 7C.

In a preferred embodiment, at step 733 a query is made to determine if a UID has been provided. If no UID has been provided, execution is terminated at step 738. Thus, in this preferred embodiment, the path finder is deterministic as it can check the validity of any files it determines to be possible matches. If a UID has been provided, execution proceeds to step 734. At step 734, the presence of a unique identifier ("UID") within the file is determined. In a preferred embodiment, if no UID is present, an error is returned at step 736 and execution is terminated at step 738. If a UID is present, then, at step 740, a determination is made as to whether the UID is associated with a file. If no file is found, then, at step 742, an error is returned to the user and program execution ceases at step 744. If the UID is attached to a file, then, at step 746, the file path is returned to the user and the program terminates at step 748. It will be appreciated by those of skill in the art that a UID, while useful for providing a check on a potential file, is not required. The UID is embedded into file during the indexing process to facilitate determination that a file uncovered in the searching process described herein is a file which has been indexed. Preferably, if a file can be indexed a UID is assigned to that file. Thus, if a target file name is determined to be a reasonably likely hit by the heuristics, but lacks a UID, that file can be excluded as a potential retrieval candidate. The embedding and choice of appropriate UIDs will be apparent to those of skill in the art.

The quality flag set at step 732 as described above is an indication of the robustness of the file name determined by the heuristics applied in step 724. If more than a predetermined number of characters in the target file name are determined by matching case-insensitive equivalent characters to the characters of the source file, the quality flag will be not be set and a warning message will be sent. In a preferred embodiment, if more than half of the half of the characters of the target file are matched using such equivalents the quality flag will not be set. Other conditions may be defined, or the user allowed to set a desired quality tolerance, without departing from the invention.

The heuristics applied at step 724 in Figure 7B will now be discussed in greater detail. As described above, when an exact match between the source path name element and the target path name element cannot be obtained, a variety of heuristic rules are applied to the source path name to increase the likelihood of obtaining a file name which correlates to a target file name. Based on their experience with the number of popular networking software packages, the inventors have determined a series of heuristic rules which, when applied to the source path name, provide a high probability of successful file name correlations. The preferred heuristic rules include: (1) converting the first character of the path element to upper case; (2) converting the whole path element to lower or upper case and converting the target path element to lower case; (3) determining whether the first three characters of the source path element are identical to the first three characters of the target path element; (4) converting both path elements to lower case and performing item (3); (5) determining whether the source path element is a substring of the target path element; (6) converting both path elements to lower case and performing item (5); (7) removing the "white spaces" from the target path element and determining whether the source path element is a substring or vice versa; and (8) using a weighted string comparison to determine if the path elements are close enough to be considered candidate matches. It will be appreciated by those with skill in the art that various additional heuristic rules can be applied without departing from the scope of the present invention. Thus, step 724 functions as a permutator which forms variations of the source file name by permutation to provide variants for comparison with the target file names being searched.

It has been found by the inventors that the heuristics just described demonstrate different degrees of efficacy with respect to different operating systems. For the Macintosh® operating system, element 6 is preferred as a first attempt to determine the correlation, element 7 is preferred as the first alternative to element 6 and element 8 is preferred as the final alternative. In the Windows operating system, element 5 is the preferred heuristic to apply. Using these heuristic rules, the inventors have found success in obtaining file path names correlating to the desired files with a success rate of greater than 95%.

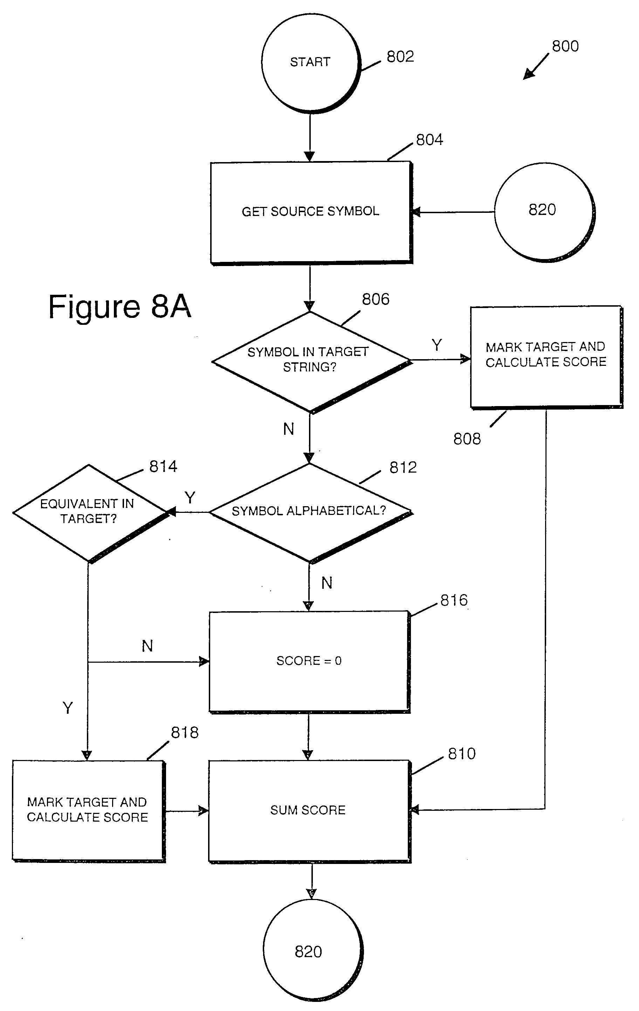

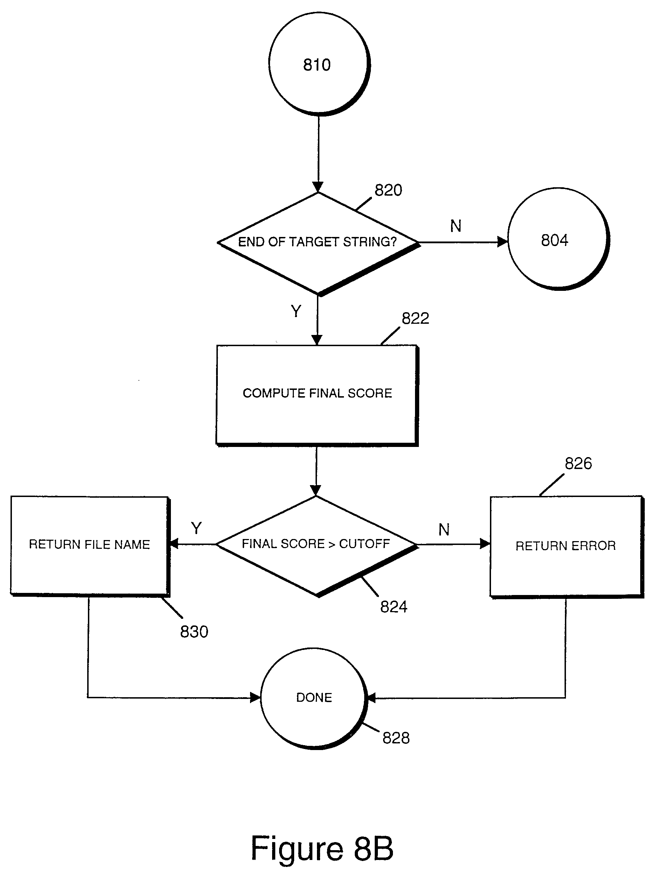

The weighted string comparison referred to above is illustrated in greater detail at 800 in Figure 8. Beginning with the start instruction 802, at step 804, a symbol from the source path name is obtained from the source stack. At step 806, a determination is made as to whether that symbol is present in the string of the path name element in the target stack. If the symbol is present in the target file name, then, at step 808, the corresponding element in the target string is marked with a sentinel and a score is calculated and added to a running sum at step 810. If the symbol is not present in the target string, then, at step 812, a determination is made as whether the symbol is alphabetical. If the symbol is alphabetical, then, at step 814, the target path name characters are searched to determine whether a case-insensitive equivalent character is present in the target path name. If no such equivalent is present, then, at step 816, a score of 0 is assigned and added to summation at step 810. If, however, an equivalent character is found the element is marked and a score is calculated at step 818 and included at the sum in step 810. This sequence is repeated for each character in the source file name. Thus, it will be appreciated that steps 806-810 function as a comparator to compare the variations of the source file name with the target file names.

Once the score for a particular symbol has been added to the sum, a determination is made as to whether the end of the source string has been reached at step 820. If the end has not been reached, control passes back to step 804 and another symbol is obtained and a score calculated as described above. If the end of the source string has been reached, then a final correspondence score is computed at step 822 and, at step 824, a determination is made as to whether the final score exceeds a preset cutoff value. If the final score is less than or equal to the cutoff value, an error is returned at step 826 and operation of the program terminates at step 828. If the final score, however, is greater than the cutoff value, then the file name is returned at step 830.

The scoring described with respect to steps 808 and 818 can be any measure of the goodness of fit between the source symbol and the target path name characters being compared. In a preferred embodiment, a score of 1000 is given for each exact match. However, if the exact match is not at the same position in the string as the source symbol, then the square of the distance separating the two elements is subtracted from the score. Similarly, if the symbol has a case insensitive equivalent in the target, a score of 850 is applied for an exact match in terms of location and a penalty of the square of the distance between the elements is subtracted if an exact match is not found. In a preferred embodiment, distance is defined as the absolute value of the location or index of the character in the target string minus the location or index of the character in the source string. For example, if both strings contain the character "a", but the location of "a" in the source string is at position 1, and the location of the character "a" in the target string is at position 3, a total of 2² = 4 would be deducted from the initial score of 1000. However, it will be appreciated by those with skill in the art that various other measures may be used to determine goodness of fit without departing from the present invention.

In a preferred embodiment, the final score, calculated at step 824, is the average score for each comparison; that is, the sum of the scores for each comparison made divided by the total number of symbols compared. Thus, if the source path name element contained five symbols, the maximum final score would be 5000 divided by 5 or 1000. This value is then compared against the cutoff value in step 824. A preferred cutoff value is 500. However, other cutoff values can be used, or the user can select a cutoff value from a range of possible values. Higher cutoff values will decrease the likelihood of false positives while lower cutoff values increase the number of possible file name correlations.

Target file names which are returned as possible matches at step 410 of Figure 4 presented to the requestor. If the requestor is the user of the searching computer, the presentation will preferably be made through viewer 246. In a preferred embodiment, the file names are presented in the form of a list of possible matches, which list reflects the search of the entire suite of directories and subdirectories which contain files. However, it will be appreciated that matches may be presented in other formats, for example, as each file name is returned in step 414. In addition, it will also be appreciated that the scope of the search can be truncated, *e.g.*, by instructing the file path finder to search only selected directories. In addition, a selector can be provided for selecting a file to be opened by the operating system. The selector may be the user acting through either the viewer or some other file manager resident on the computer system or network, or the user may be a program which calls the path name finder with a file name query and then selects the matches presented according to certain criteria.

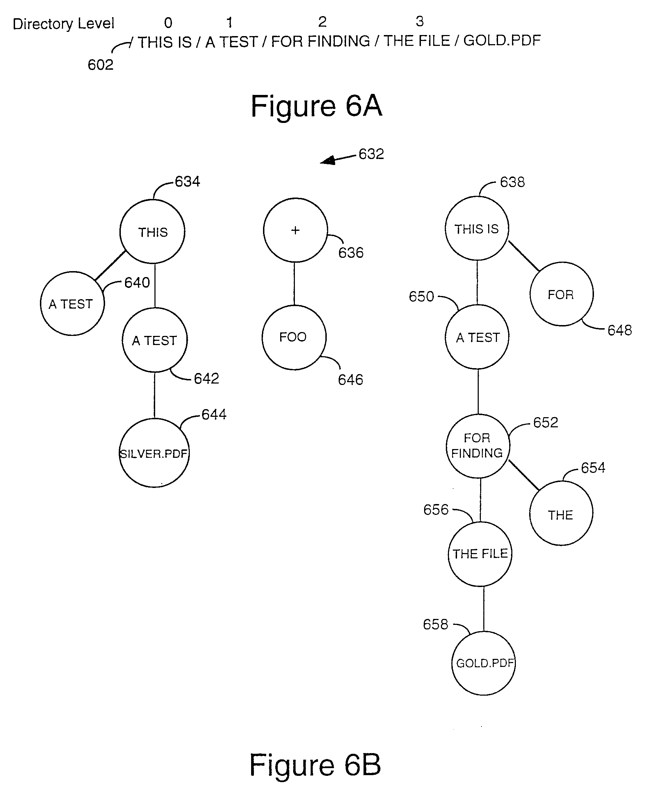

Referring now to Figures 6A and 6B, an example of the method of the present invention will be illustrated. This example is offered solely for the purpose of illustration and is in no way intended to limit the scope of the present invention in any manner.

Figure 6A shows an example of a requested, or source, file path name wherein the directory and subdirectory names are separated by foreslashes ("/"). Figure 6B illustrates a hypothetical file tree having various directories and subdirectories. The root, or zeroth, directory level is denoted by the first foreslash 602 and corresponds to the root level of the hypothetical directory shown at 632. The directory level names are "THIS IS" (level 0); "A TEST" (level 1); "FOR FINDING" (level 2); "THE FILE" (level 3). "GOLD.PDF" is the desired file at subdirectory level 3. This path name is shown in Figure 6B by the chain of subdirectories 638, 650, 652 and 656. The desired file is shown at 658.

Thus, referring to Figure 7A, the path name provided in Figure 6A is first converted into a device-independent representation by removal of the foreslashes. The root level directory name "THIS IS" and the first subdirectory name "A TEST" are pushed onto SSTACK and TLEVEL is read (SLEVEL and TLEVEL are both set to 0). The top of SSTACK is read and the appropriate array elements are checked to determine if the any subdirectories "THIS" 634, "+" 636 and "THIS IS" 638 have been checked. Since none has been flagged yet, the first subdirectory of a level 0 directory , *e.g.*, "FOO" is flagged and the heuristics applied to determine a potential match. Referring now to Figure 8A, the first character of the source file name "A" is checked against the target string "FOO". As the character "A" is not present in the target string, but is alphabetical, a case-insensitive equivalent is sought. Since no such equivalent exists for any of the target string characters, a score of 0 is added to the running total at step 812 of Figure 8A. This is repeated for the remaining characters in the source file path name and a correspondence score of 0 is produced. Thus no reasonable hit is provided by the heuristics and the next unmarked subdirectory at level 0 is checked.

Next, directory 638 ("THIS") and its subdirectory 640 ("ATEST") are examined. Applying the steps described above and rule 7 of the heuristics a match is found and the counters are incremented and the next source file name element "FOR FINDING" is pushed onto SSTACK. However, since "ATEST" has no subdirectories and TLEVEL is not 0, the counters are decremented and the appropriate filename path elements are removed from SSTACK and TSTACK. The subdirectory "A TEST" is then examined as described above and found to provide a hit. This subdirectory has the file "SILVER.PDF" which is then checked. As this file does not have equivalents to the next source path name element "FOR FINDING", the appropriate counter decrements are made in addition to removal of the appropriate stack elements and the next unmarked subdirectory is examined.

In the case of the subdirectory 648, "FOR", the result just described is also obtained and the search moves to subdirectory 650, "A TEST". As described above, application of the heuristics provides matches between the subdirectories 612 and 652. However, subdirectory 654 is found not to match subdirectory 616 "THE FILE" at subdirectory level 3. Applying step 726, TLEVEL and SLEVEL are decremented to 2 and TSTACK is popped to leave "FOR FINDING". STACK is popped to leave "A TEST". Reloading both TSTACK and STACK a match is found with subdirectory 656 and the file 658 "GOLD.PDF". Since these matches all have correspondence scores equal to 1000, the quality flag is set and this file is offered as a high-probability match.

Thus, it will be seen from the foregoing that the present invention provides a method, software, and an apparatus for determining the file path name of document stored on a host computer system, which file path name corresponds to the file path name for the document on the client computer system. The present invention therefore provides greater ease of document management and information exchange between computer operating which employ different file path name conventions.

While this invention has been described in terms of several preferred embodiments, it is contemplated that alterations, modifications and permutations thereof will become apparent to those skilled in the art upon a reading of the specification and study of the drawings. Furthermore, certain terminology has been used for the purposes of descriptive clarity, and not to limit the present invention. It is therefore intended that the following appended claims include all such alterations, modifications and permutations as fall within the true spirit and scope of the present invention.

## Claims

1. A method for a finding a file stored on a host computer system comprising the steps of:
(a) determining a requested file name provided by a requestor;
(b) searching said host computer system for at least one target file name which is closely related to said requested file name; and
(c) presenting said target file name to said requestor.

2. A method as recited in claim 1, wherein said requestor comprises a finder routine running on said host computer system.

3. A method as recited in claim 1, wherein said requestor comprises a finder routine running on a client computer system coupled to said host computer system.

4. A method as recited in claim 1, wherein said searching step comprises comparing said requested file name to each a plurality of file names on said host computer and developing a list of potential target file names which are closely related to said requested file name based upon the use of a set of heuristics which compare variations of said requested file name to said plurality of file names.

5. A method as recited in claim 4 wherein said comparing step traverses a plurality of directories containing said plurality of file names.

6. A method as recited in claim 5 wherein said comparing step traverses all directories on said host computer and compares all file names in all of said directories.

7. A method as recited in claim 6, wherein said use of heuristics comprises removing the white spaces from said directory name for said document on said client computer system and comparing said requested file name and said target file name.

8. A method as recited in claim 6, wherein said use of heuristics comprises converting all of the characters of the path names for said document on both said host and client computer systems to lower case.

9. A method as recited in claim 6, where said use of heuristics comprises performing a weighted string comparison of the elements of said path names for said document on said host and client computer systems.

10. A method as recited in claim 6, which method further includes calculating a correspondence score for each comparison and said developing said list of potential target fine names comprises includes those files for which said correspondence score exceeds a cutoff value.

11. A method for determining a name of a file stored on a host computer system corresponding to a requested file name from a client computer system, comprising the steps of:
(a) comparing a plurality of variations of said requested file name to file names stored in a root directory of said host computer system;
(b) identifying potential matches between said variations of said requested file names and said file names in said root directory; and
(c) repeating steps (a) and (b) for subdirectories of said root directory until all subdirectories have been processed.

12. A method as recited in claim 11, further including the step of selecting at least one of said potential matches as corresponding to said requested file name.

13. A method as recited in claim 11, wherein said comparing comprises the steps of:
(a) retrieving a source symbol from one of said plurality of variations of said requested file name;
(b) comparing said source symbol to a symbol in a file name in said root directory; and
(c) calculating a correspondence score based on said comparison.

14. A method as recited in claim 13, wherein said correspondence score is calculated by comparing the distance between said source symbol and a symbol in the directory name for said document on said host computer system.

15. A method as recited in claim 13, wherein said method comprises comparing said correspondence score with a cutoff value.

16. A method as recited in claim 11 further comprising the step of creating an index of files on said host computer system.

17. A method as recited in claim 16, wherein said index comprises a unique identifier for each of said files on said computer system.

18. A method as recited in claim 17, further comprising the step of determining the presence of said unique identifier in said document.

19. A method as recited in claim 11, further comprising the step of determining a quality flag for said path name corresponding to the path name for said document on said client computer system.

20. A method as recited in claim 11, wherein said comparing comprises applying a set of heuristics to said path name for said document on said client computer system.

21. A method as recited in claim 20, wherein said applying a set of heuristics comprises removing the white spaces from said directory name for said document on said client computer system.

22. A method as recited in claim 20, wherein said applying a set of heuristics comprises converting all of the characters of the path names for said document on both said host and client computer systems to lower case.

23. A method as recited in claim 20, wherein said applying a set of heuristics comprises performing a weighted string comparison of the elements of said path names for said document on said host and client computer systems.

24. A finder system for finding files on a computer comprising:
(a) data storage device comprising at least one file;
(b) means for requesting a file which may reside on said data storage device by a requested file name; and
(c) means for searching said computer for said file by comparing variations of said requested file name with file names on said data storage device to produce a set of potential target file names that may correspond to said requested file name.

25. A finder system as recited in claim 24, wherein said searching step comprises comparing said requested file name to each a plurality of file names on said host computer and developing a list of potential target file names which are closely related to said requested file name based upon the use of a set of heuristics which compare variations of said requested file name to said plurality of file names.

26. A finder system as recited in claim 25 wherein said comparing step traverses a plurality of directories containing said plurality of file names.

27. A finder system as recited in claim 24 wherein said comparing step traverses all directories on said host computer and compares all file names in all of said directories.

28. A finder system as recited in claim 25, wherein said use of heuristics comprises removing the white spaces from said directory name for said document on said client computer system and comparing said requested file name and said target file name.

29. A finder system as recited in claim 25, wherein said use of heuristics comprises converting all of the characters of the path names for said document on both said host and client computer systems to lower case.

30. A finder system as recited in claim 25, where said use of heuristics comprises performing a weighted string comparison of the elements of said path names for said document on said host and client computer systems.

31. A finder system as recited in claim 25, which finder system further includes calculating a correspondence score for each comparison and said developing said list of potential target file names comprises includes those files for which said correspondence score exceeds a cutoff value.

32. A finder system for finding files on a network comprising:
(a) a network;
(b) a host device coupled to said network;
(c) a client device coupled to said network which requests a file which may reside on said host device by a requested file name; and
(d) means for searching said host device for said file by comparing variations of said requested file name with file names on said host device to produce a set of potential target file names that may correspond to said requested file name.

33. A finder system as recited in claim 32 wherein said requested file name and potential target file names include path designations.

34. A finder system as recited in claim 32 wherein said searching step comprises comparing said requested file name to each a plurality of file names on said host computer and developing a list of potential target file names which are closely related to said requested file name based upon the use of a set of heuristics which compare variations of said requested file name to said plurality of file names.

35. A finder system as recited in claim 34 wherein said comparing step traverses a plurality of directories containing said plurality of file names.

36. A finder system as recited in claim 35 wherein said comparing step traverses all directories on said host computer and compares all file names in all of said directories.

37. A finder system as recited in claim 34, wherein said use of heuristics comprises removing the white spaces from said directory name for said document on said client computer system and comparing said requested file name and said target file name.

38. A finder system as recited in claim 34, wherein said use of heuristics comprises converting all of the characters of the path names for said document on both said host and client computer systems to lower case.

39. A finder system as recited in claim 34, where said use of heuristics comprises performing a weighted string comparison of the elements of said path names for said document on said host and client computer systems.

40. A finder system as recited in claim 34, which finder system further includes calculating a correspondence score for each comparison and said developing said list of potential target file names comprises includes those files for which said correspondence score exceeds a cutoff value.

41. Software stored in a digital media for determining a file name of a file stored on a host computer system that corresponds to a requested file name from a client computer system, comprising:
(a) a permutator for permuting said requested file name;
(b) a comparator for comparing permutations of said requested file name with file names on said host computer system and for storing a list of potential matches; and
(c) a selector for selecting a match from said list of potential matches.

42. Software as recited in claim 41, wherein said permutator comprises means for permuting said requested file name based upon the use of a set of heuristics which compare variations of said requested file name to said plurality of file names.

43. Software as recited in claim 41, wherein said use of heuristics comprises removing the white spaces from said directory name for said document on said client computer system and comparing said requested file name and said target file name.

44. Software as recited in claim 42, wherein said use of heuristics comprises converting all of the characters of the path names for said document on both said host and client computer systems to lower case.

45. Software as recited in claim 42, where said use of heuristics comprises performing a weighted string comparison of the elements of said path names for said document on said host and client computer systems.

46. Software as recited in claim 42, which software further includes calculating a correspondence score for each comparison and said developing said list of potential target file names comprises includes those files for which said correspondence score exceeds a cutoff value.

47. Software as recited in claim 41 wherein said comparator comprises means for traversing a plurality of directories containing said plurality of file names.

48. Software as recited in claim 47 wherein said comparator comprises means for traversing all directories on said host computer and comparing all file names in all of said directories.
